(19) Europäisches Patentamt
European Patent Office
Office européen des brevets

(11) **EP 4 249 923 A1**

(12) **EUROPEAN PATENT APPLICATION**

(43) Date of publication:
**27.09.2023 Bulletin 2023/39**

(21) Application number: **23160882.9**

(22) Date of filing: **09.03.2023**

(51) International Patent Classification (IPC):
**G01P 15/125** (2006.01)   **G01P 15/08** (2006.01)

(52) Cooperative Patent Classification (CPC):
**G01P 15/125;** G01P 2015/0831

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 FI 20225263**

(71) Applicant: **Murata Manufacturing Co., Ltd. Nagaokakyo-shi, Kyoto 617-8555 (JP)**

(72) Inventors:
• **TORKKELI, Altti**
  **04340 Tuusula (FI)**

• **LIUKKU, Matti**
  **00400 Helsinki (FI)**
• **KILPINEN, Petteri**
  **02620 Espoo (FI)**

(74) Representative: **Boco IP Oy Ab Kansakoulukatu 3 00100 Helsinki (FI)**

Remarks:
A request for correction of the description has been filed pursuant to Rule 139 EPC. A decision on the request will be taken during the proceedings before the Examining Division (Guidelines for Examination in the EPO, A-V, 3.).

(54) **IMPROVED ACCELEROMETER ELEMENT FOR DETECTING OUT-OF-PLANE ACCELERATIONS**

(57)   An accelerometer element that includes a body, a mass and a spring system that couples the mass to the body. The spring system is formed to allow the mass a reciprocating rotary motion about a rotary axis. The mass includes a volume of a bulk material that forms two essentially closed surfaces and incorporates between those two closed surfaces one or more weight elements, each of which is formed of a substance whose weight per unit volume is different from weight per unit volume of the bulk material. The one or more weight elements are incorporated in the mass so that the centre of gravity of the mass is offset from the rotary axis in an in-plane direction and the centre of gravity of the mass and the rotary axis are at the same level within the mass in the out-of-plane direction.

Figure 2a

**EP 4 249 923 A1**

**Description**

TECHNICAL FIELD

This description relates to measuring accelerations, and particularly to an accelerometer element intended to measure accelerations in an out-of-plane direction. Also, a method for manufacturing such acceleration element is described.

BACKGROUND

An accelerometer refers here to an apparatus that measures acceleration relative to a local inertial frame. Micromachined microelectromechanical systems (MEMS) accelerometers are increasingly present in various industrial applications. An accelerometer element may be a MEMS element that includes stationary parts and moving parts that respond to proper acceleration with a mechanical motion. These moving and stationary parts can be connected to an electrical circuit so that the mechanical motion induced by acceleration is transformed into one or more electrical signals. An accelerometer element can be implemented, for example, as a MEMS die.

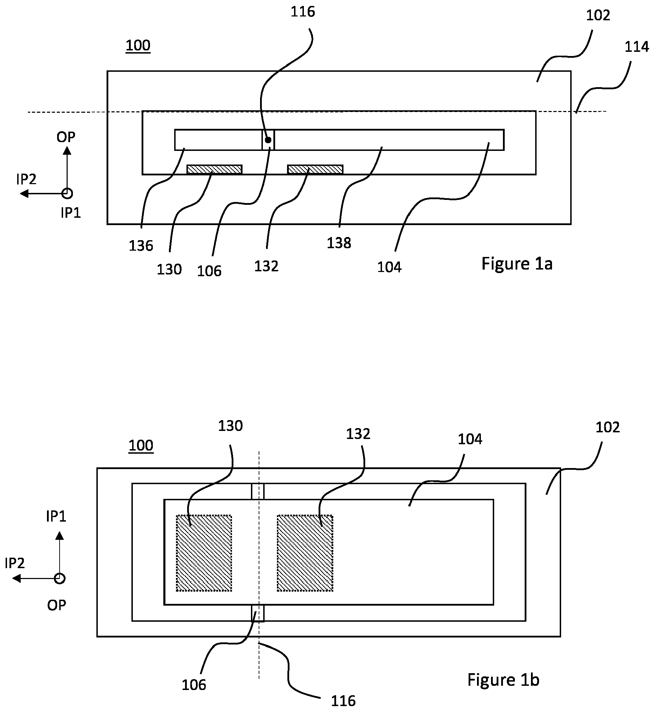

Figures 1a and 1b disclose a basic setup for a conventional capacitive accelerometer element 100 that includes a body 102, a mass 104 and a spring system 106 that couples the mass 104 to the body 102. Figure 1a shows a side view of the accelerometer element and Figure 1b shows a top view of the accelerometer element. The body 102 represents here a solid member that can be fixedly attached to move with an object that is exposed to and moves in response to accelerating forces. The mass 104 is attached to the body 102 with an elastically deforming arrangement, a spring system 106. When velocity of the sensed object changes, the body that is fixed to the object moves with it, but the mass tends to remain stationary due to its inertia. The spring system deforms elastically so that the mass becomes displaced from the body to an extent that corresponds with the sensed acceleration. The body 102 can include one or more stationary electrodes and the mass 104 acts as a movable electrode and the displacement of the mass changes the capacitance between the stationary and movable electrodes in proportion to the applied acceleration. The capacitance difference between the two electrodes can thus be used as a measure of the sensed acceleration.

Depending on the configuration, an accelerometer element can sense accelerations in one or more of the three mutually orthogonal directions. Due to the processes used to manufacture microelectromechanical systems, the accelerometer element has forms that align parallel or perpendicular to a virtual reference plane 114. Typically, the body of the accelerometer element includes at least one substrate part that includes a planar form and provides dimensions based on which the virtual reference plane can be determined. Figure 1 illustrates a virtual reference plane 114 that extends in two mutually orthogonal in-plane directions, a first in-plane direction IP1 and in a second in-plane direction IP2, which are mutually orthogonal. Figures 1a and 1b show also an out-of-plane direction OP that is orthogonal to the first in-plane direction IP1 and the second in-plane direction IP2.

The accelerometer element 100 of Figures 1a and 1b illustrates a see-saw type of accelerometer element wherein the spring system 106 is formed to allow the mass 104 a reciprocating rotary motion about a rotary axis 116. The rotary axis is parallel to one of the in-plane directions, here the first in-plane direction IP1. The spring system 106 is illustrated with two aligned spring structures, shown here as beams that couple the mass from two sides to the body, and twist elastically between the body and the mass to enable a reciprocating rotary motion of the mass about the rotary axis 116.

The rotary axis 116 divides the mass 104 into two parts, a first part 136 and a second part 138. Based on Newton's second law, the force F acting on an object is $F = ma$, wherein m is the mass of the object and a is the acceleration upon the object. In order to induce the seesaw type of rotary motion in a measurement direction, the inertial forces acting on each part must be different in said measurement direction. Considering that inertial forces are caused by the same acceleration, masses of the first part and the second part must be different. Figures 1a and 1b show a typical conventional solution where the mass is basically a rectangular cuboid with a thickness in the out-of-plane direction OP, width in the first in-plane direction IP1 and length in the second in-plane direction IP2. The thickness of the mass 104 is typically much smaller (of the order of 5 or more) than its length or width. In order to implement the required imbalance of masses for the see-saw motion, the rotary axis divides the cuboid asymmetrically so that the masses of the two parts are different. In the example of Figures 1a and 1b, the mass of the first part 136 is less than the mass of the second part 138.

The problem with these conventional structures is that the asymmetrical form, which is necessary to establish sensitivity to accelerations in the out-of-plane direction, means that the moving mass is also electrically asymmetric. Figures 1a and 1b show an example situation where static electrodes 130, 132 are positioned on a surface of the body 102. When the first part 136 of the mass moves closer to a first electrode 130 due to the rotary motion, the second part 138 of the mass moves farther away from the second electrode 132, and vice versa. For differential detection, the static electrodes 130, 132 need to be symmetrical with respect to the rotary axis 116. As can be seen from Figures 1a and 1b, a large part of the surface area of the second part 138 of the mass is not used for sensing. Such waste of surface area in design of MEMS elements should be effectively avoided.

Another aspect related to the asymmetrical form of the mass is gas damping. The mass 104 is typically surrounded by fluid, typically gas, which flows in the narrow gaps between the mass and the body. With sufficient accuracy, a gas volume between the mass and the body can be considered as a thin film of gas and its damping effect is proportional to the area of the film. It is clear that in these conventional structures, the gas damping upon the first part 136 is different from the gas damping upon the second part 138. Gas damping is necessary to reduce unwanted high-frequency mass motion, but compression of damping gas also causes a spring effect which contributes to whole spring-mass system of the sensor in dynamic situation. Asymmetry in gas damping causes therefore sensor reading error in the vibration environment.

In some known structures, like the one disclosed in patent publication US 10,126,322 B2, the asymmetry in the form of the see-saw mass has been avoided by providing a mass wherein the two parts are of the same length in the second in-plane direction IP2, but one of the parts includes an open recess etched into the backside of the rotatable mass. A planar side of the rotatable mass is opposite fixed electrodes, and the recess section is thus on the other side of the rotatable mass. The open recesses on one side of the mass mean that the centre of gravity of the mass is shifted from the rotation axis in the out-of-plane direction and the structure thus responds with the rotary motion to accelerations in the out-of-plane direction OP and in the second in-plane direction IP2. To balance the sensitivity in those two directions, the recesses are dimensioned so that the angle θ between a perpendicular line extending from the centre of gravity of the mass to the rotation axis and the surface of the mass is equal to 45 degrees. Such a back-recessed mass may be a practical solution for some needs, but recessing a moving mass is a very difficult process to make accurately and it usually leads to variating offset between the rotation axis and the centre of mass in out-of-plane direction. Also, when a mass is sensitive to in-plane and out-of-plane acceleration it is impossible to distinguish the acceleration direction with one detection mass. The offset causes unwanted cross-axis sensitivity that degrades vibration robustness, is difficult to control accurately and thus deteriorates accuracy of sensing accelerations in the out-of-plane direction. Furthermore, large open recesses in the mass are problematic in view of gas damping.

BRIEF DESCRIPTION

An object of the present disclosure is to provide an accelerometer element and a method for manufacturing such accelerometer element so that some of the disadvantages of the conventional structures are solved or at least alleviated.

The object of the disclosure is achieved by an accelerometer element and a method for manufacturing such accelerometer element defined with the respective independent claims. Some advantageous embodiments are disclosed in the dependent claims.

The described solutions are based on the idea of weight elements, specific regions that are enclosed between essentially closed surfaces of bulk material of a rotatable mass and include substance whose weight per unit volume is different from the weight per unit volume of the bulk material. These weight elements are further positioned in a specific way inside the rotatable mass so that cross-axis sensitivity of the structure is minimised, and gas damping acts symmetrically on both parts of the rotatable mass.

BRIEF DESCRIPTION OF THE DRAWINGS

In the following the disclosure will be described in greater detail by means of preferred embodiments with reference to the accompanying drawings, in which

Figures 1a and 1b disclose a basic setup for a conventional capacitive accelerometer element;

Figures 2a and 2b show an example of an improved accelerometer element;

Figures 3a and 3b show another example of an improved accelerometer element;

Figures 4a to 4g illustrate an exemplary process for implementing the enclosed weight element configuration;

Figures 5a to 5g illustrate another exemplary process for implementing the enclosed weight element configuration;

Figures 6a to 6c illustrate another option for detecting motion of the mass;

Figures 7a and 7b illustrate an example structure wherein the weight element includes support structures;

Figure 8 illustrates an example structure wherein the weight element includes substance that is heavier than the bulk material of the mass;

Figure 9 illustrates an example structure with two types of weight elements;

Figure 10 illustrates an example structure with minuscule vent holes;

Figures 11a to 11c illustrate an example structure an accelerometer element configured for sensing also in at least one of the in-plane directions

Figure 12 illustrates an alternative for the connection between the mass and the body;

Figures 13a and illustrate a further example structure for the accelerometer element;

Figures 14a and 14b illustrate a further example structure for the accelerometer element;

Figure 15 illustrates stages of an exemplary manufacturing method.

DETAILED DESCRIPTION

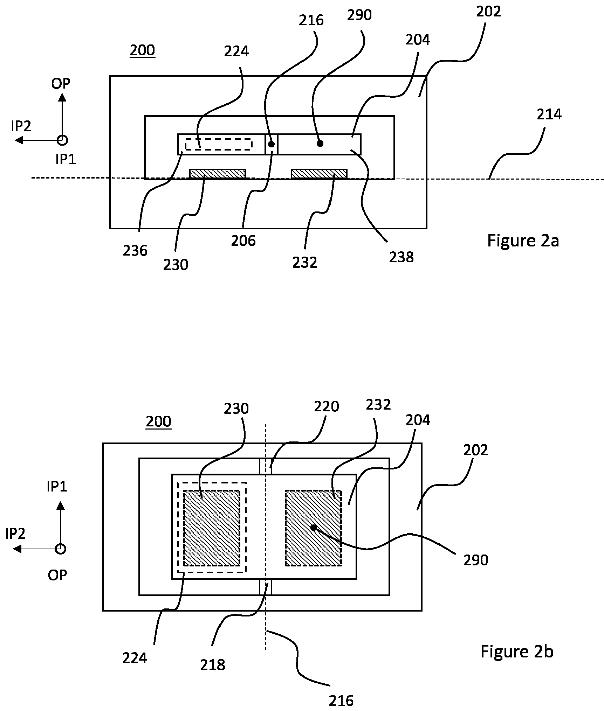

Figures 2a and 2b show an example of an improved accelerometer element 200 according to the present invention. Figure 2a shows a side view of the accelerometer element and Figure 2b shows a top view of the accelerometer element, however, for clarity without the cap part of the body. The accelerometer element 200 includes parts similarly referenced with the conventional accelerometer element introduced in Figures 1a and 1b so information on those parts may be referred also from description of Figures 1a and 1b. The accelerometer element 200 includes a body 202, a mass 204 and a spring system 206 that couples the mass to the body. The body refers herein to a material object, typically a solid volume that can be fixedly attached to an element whose acceleration is measured. The body 202 provides forms or surfaces, for example anchors or frames, to which the mass 204 can be elastically coupled through the spring system 206.

The accelerometer element 200 is typically formed by micromachining, bonding and dicing planar wafers. A virtual reference plane that can be used to determine directions discussed herein is considered to align with the parallel planar forms of the bonded wafer discs. Figures 2a and 2b show a virtual reference plane 214 that extends in a first in-plane direction IP1 and in a second in-plane direction IP2. The first in-plane direction IP1 and the second in-plane direction IP2 are orthogonal and both parallel to the virtual reference plane 214. Figures 2a and 2b show also an out-of-plane direction OP that is orthogonal to IP1 and IP2 and thus perpendicular to the virtual reference plane 214.

The accelerometer element 200 is designed to sense accelerations in the out-of-plane direction OP. For this, the spring system 206 is formed to allow the mass 204 a reciprocating rotary motion about a rotary axis 216 that is parallel to the first in-plane direction IP1. The spring system 206 that enables such motion may be implemented with various spring formations, but Figures 2a and 2b show an exemplary simple design that is easy to manufacture. In this design the spring system 206 includes two torsional spring structures, shown here as beams 218, 220. Other forms of torsional springs can be applied within the scope. In this example, one end of each beam 218, 220 is connected to the body 202 and the other end is connected to a mass 204 and each beam 218 is of the same thickness as the mass 204. Regions of connection of the beams 218, 220 to the body 202 and to the mass 204 are aligned to a line that forms the rotary axis 216. As discussed with Figures 1a, 1b, when the accelerometer element 200 is exposed to acceleration, and the mass 204 wants to move with respect to the body 202, the beams 218, 220 twist elastically along their respective axes and enable the rotary motion of the mass 204 about the rotary axis 216.

For detection of the rotary motion, the accelerometer element in this example includes a first electrode 230 and a second electrode 232 disposed on a planar surface of the body 202. The rotary axis 216 divides the mass into two parts, so that when the first part 236 of the mass moves closer to a first electrode 230 due to the rotary motion, the second part 238 of the mass moves farther away from the second electrode 232, and vice versa. The mass is thus suspended to move in a see-saw manner about the rotary axis.

The mass 204 is formed of a volume of a bulk material that has a characteristic weight per unit volume. The volume of the bulk material forms two essentially closed surfaces that extend in the first in-plane direction IP1 and the second in-plane direction IP2. The expression "essentially closed surface" refers here to a surface that provides a continuous boundary for the mass 204 but may include one or more minuscule openings that open less than 1% of the surface area of the surface. For the rotary motion of the mass 204, the volume of bulk material incorporates between those two closed surfaces one or more weight elements 224, each of which is formed of a substance whose weight per unit volume is different from weight per unit volume of the bulk material. In the example of Figures 2a and 2b, the volume of bulk material includes an exemplary weight element 224 that is formed of a hollow cavity that is completely enclosed into the bulk material of the mass 204, other examples will be discussed later on. Due to the weight element 224, the centre of gravity of the mass 290 is offset from the rotary axis in the second in-plane direction but both in-plane sides of the mass are closed, in other words, do not include large, etched recesses. This means that the mass can be designed to have a form whose boundary is symmetric with respect to the rotary axis 216, but the mass still provides an asymmetric weight distribution. The mass is then responsive to accelerations in the out-of-plane direction but provides symmetrical gas damping in either side of the gap. Furthermore, since a desired position of the weight element 224 in the out-of-plane direction can be provided by adjusting the form and content of the weight element 224, the distribution of weight of the mass 204 can be adjusted so that the centre of gravity of the mass 290 and the rotary axis 216 are at the same level within the mass in an out-of-plane direction OP. This minimises sensitivity of the detection in the out-of-plane direction OP to accelerations in the in-plane directions IP1, IP2, and thus maintains accuracy of the measurement in the out-of-plane direction. If dimensions of the mass in the out-of-plane direction are considered to represent thickness dimensions of the mass, the level of the rotary axis and the centre of gravity of the mass is advantageously in the middle of the thickness dimension of the mass.

As mentioned, the spring system 206 is formed to allow the mass 204 a reciprocating rotary motion about a rotary axis 216 that in Figure 2 is parallel to the first in-plane direction IP1. In order to achieve required stability for measurements of the rotary motion, it is important that the spring system 206 rigidly resists linear motions of the mass 204. Especially important is rigidity of the spring system 206 in the out-of-plane direction OP as deflections in that direction enable linear motion of the mass 204 with respect to the electrodes 230, 232, and thus induce a random parasitic common mode capacitance signal to the measurements. Linear motions of the mass 204 in the two in-plane directions IP1, IP2 are less harmful as they do not essentially modify the capacitance between the mass 204 and the electrodes 230, 232. An overlap between electrodes 230, 232 and the mass 204 typically remains well within edges of the mass 204 so that the area of overlap, and thus the measured capacitance, does not change with minor in-plane deflections of the spring system 206.

The examples described herein show structures that enable an optimal combination of maximal rigidity against motions of the mass 204 in the out-of-plane direction OP and desired flexibility for the rotary motion of the mass 204. Rigidity of the spring system 206 in the out-of-plane direction OP is maximized by making the spring structures as thick as possible in the out-of-plane direction. Springs in the spring system 206 can be simple beams or consist of a system of connected beams with various geometries. For a given spring system shape, the one or more beams in it should optimally extend at least to the same thickness (dimension in the out-of-plane direction OP) as the mass 204. The importance of this aspect can be understood by noting that rigidity of a beam in the out-of-plane direction OP is proportional to a third power of the thickness of the beam in the out-of-plane direction OP. This means that, for example, rigidity of a spring whose thickness in the out-of-plane direction OP is half of the thickness of the mass 204, has only 1/8 of out-of-plane rigidity of a similar shaped spring which extends to a full thickness of the mass 204. When desired rigidity is achieved by letting the spring system 206 to extend at least to the full thickness of the mass 204, desired flexibility for the rotary motion can be provided by adjusting dimensions of the spring in a relevant in-plane direction. In the example of Figure 2, this relevant direction is the second in-plane direction IP2. The correct in-plane dimensions for the spring system can be determined by means of, for example, finite element method (FEM) simulations.

For differential detection in this example, the static electrodes 230, 232, need to be disposed symmetrically with respect to the rotary axis 216, but as can be seen from Figures 2a and 2b, practically the whole surface area opposite the static electrodes 230, 232 can now be used to generate signal that that corresponds with the motion of the mass 204 and thus the sensed acceleration. This improvement can be provided without compromising the balanced gas damping or increasing cross-axis sensitivity of the configuration. As the electrodes 230, 232 and the rotary axis are not in the same level in the out-of-plane direction OP, the symmetric disposal in this context is understood to relate to the symmetricity of the structures in a plane of projection that is parallel to the in-plane directions IP1, IP2.

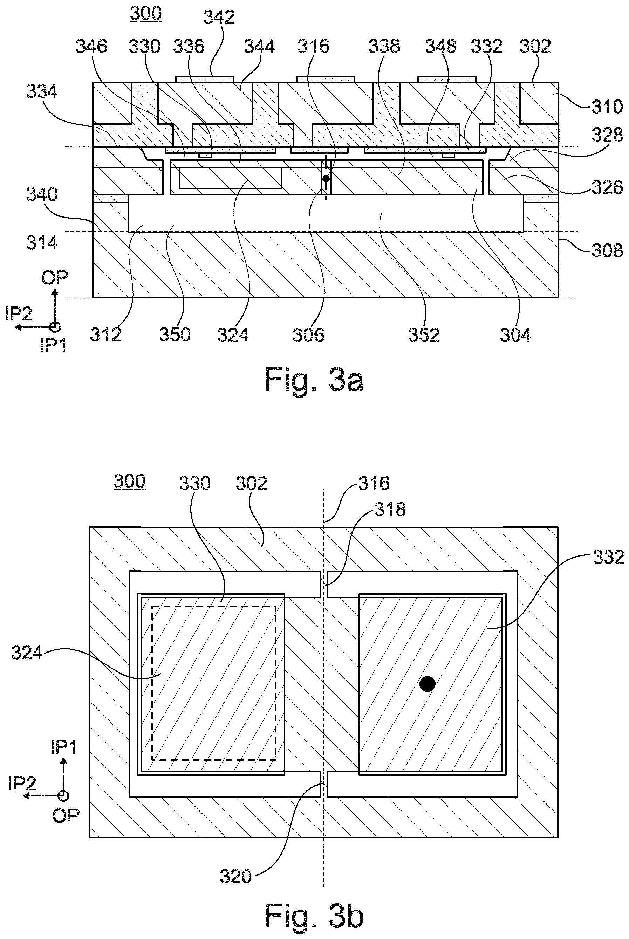

Figures 3a and 3b show another example of an improved accelerometer element 300 according to the present invention. Parts of accelerometer element 300 that are similar to the ones in Figures 1a to 2b have been referenced with corresponding reference numbers and additional description on their characteristics can be referred from the description of Figures 1a to 2b. The accelerometer element 300 includes a body 302, a mass 304 and a spring system 306 that couples the mass to the body. In this example, the body 302 includes a substrate part 308 and a cap part 310 that are hermetically bonded to each other and enclose a gap 312 within which the mass 304 can move. Figure 3a shows a side view of the accelerometer element and Figure 3b shows a top view of the accelerometer element, but for clarity without the cap part of the body. In this example, the mass 304 includes a first layer of the bulk material 326 and a second layer of the bulk material 328, both of which extend parallel to the virtual reference plane 314. The first layer of the bulk material 326 and the second layer of the bulk material 328 enclose the weight element 324 between them.

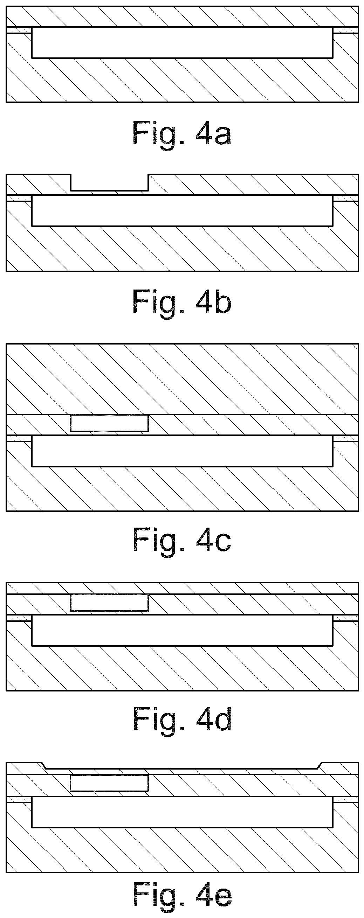

Let us first look at Figures 4a to 4g that illustrate an exemplary process for implementing the enclosed weight element configuration of Figures 3a and 3b. The process is illustrated by means of a wafer part of one accelerometer element only, but for a person skilled in the art it is clear that in wafer-based manufacturing processes, the described stages are implemented for a plurality of wafer parts made of wafers applied in the process. Accordingly, for conciseness, wafer parts shown in Figures 4a to 4g are referred to as wafers. Figure 4a shows a starting point for the process, a first wafer that in this example is a part of C-SOI wafer. Silicon-on-insulator (SOI) wafer is a semiconductor structure that includes a thin layer of single crystalline silicon (device layer) separated from a bulk substrate (handle layer) by a thin layer of insulator. A C-SOI wafer includes further cavities patterned to the handle layer wafer before it has been bonded to the device layer wafer. Naturally, use of a C-SOI wafer with built-in structures is an advantageous option, the first wafer may alternatively be formed e.g. in the beginning of the process by first processing two wafers to the configuration of the first wafer shown in Figure 4a.

Figure 4b illustrates a stage wherein a recess for the weight element is formed into the device layer of the C-SOI wafer, in this example by etching a hollow cavity into it. Figure 4c illustrates a following stage wherein a second wafer is bonded to the first wafer using direct bonding. Direct bonding (also referred to as silicon direct bonding or silicon fusion bonding) refers here to a wafer bonding process wherein two wafers are bonded to each other without an intermediate layer or external force. For the direct bonding wafer surfaces are pre-processed flat, clean and smooth so that when brought into contact, they can stick together and form a weak bonding by physical forces. After this, adhesion between the surfaces is increased by annealing. The type of created bonding is determined by the chemical species on the surfaces. In the case of silicon, hydrophilic and hydrophobic bonding is possible. In view of further etching stages that extend through the direct bonding interface, hydrophobic bonding without interface oxide (silicon oxide and silanol groups) of the hydrophilic bonding is preferred. Various plasma treatments can also be used to increase initial adhesion force and to reduce the anneal temperature for strong permanent bonding.

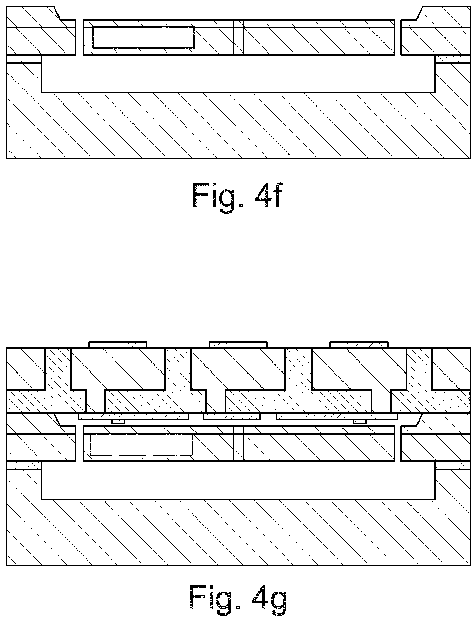

Figure 4d illustrates a stage wherein the second wafer is thinned to a defined thickness, for example by grinding and chemical-mechanical polishing processes. In this example, the defined thickness is the thickness of the mass and the height of the part of the gap for the rotary motion of the mass in the side of the cap part of the body. Figure 4e illustrates a stage wherein the second wafer is etched to provide recesses for the gap, so that parts of the second wafer designed to be in contact with the cap part of the body are maintained. Figure 4f illustrates a stage wherein the spring system is formed, and the mass is released by etching through the second wafer and the device layer of the first wafer. The spring system thus extends in the out-of-plane direction at least to the same thickness as the mass, in this example where they are released from the same layer combination, each torsional spring is substantially of the same thickness as the mass.

After this release, the rotatable mass becomes suspended from the body by means of the robust spring system and the part of the gap for the rotary motion of the mass in the side of the substrate part of the body is opened. Figure 4g illustrates a stage where the first and second wafer are bonded to a third wafer that hermetically encloses the gap.

The described process illustrates an example of a method that enables creation of the weight elements enclosed into the mass, for example a weight element 224 enclosed into the mass 204 of Figures 2a and 2b or a weight element 324 enclosed into the mass 304 of Figures 3a and 3b.

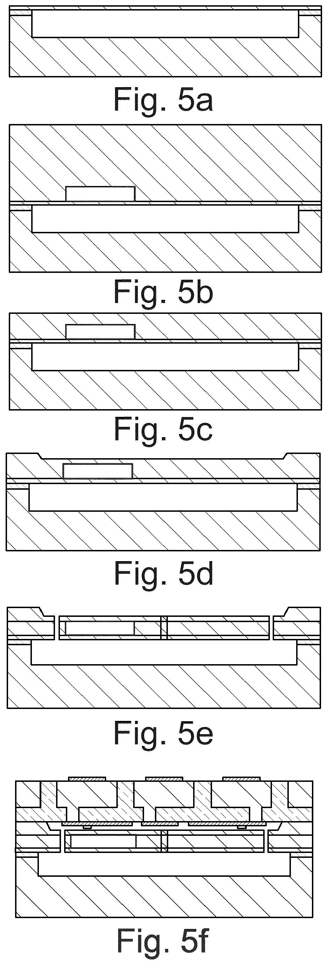

Figures 5a to 5f illustrate an alternative exemplary process for implementing the enclosed weight element configuration of Figures 3a and 3b. Figure 5a shows a starting point for the process, a first wafer that also in this example may a part of C-SOI wafer. It should be noted, however, that the first wafer does not necessarily be a C-SOI wafer with pre-formed cavity structures. A similar structure can be formed in other ways, for example, by means of sacrificial etching of buried insulator oxide through small holes in silicon layer. The C-SOI has benefit of higher cavity which reduces stray capacitances and risk of sticking. Figure 5b illustrates a stage wherein a second wafer that includes a recess for the weight element is bonded to the first wafer using direct bonding. Figure 5c illustrates a stage wherein the second wafer is thinned to a defined thickness. Figure 5d illustrates a stage wherein the second wafer is etched to provide recesses for the gap and Figure 5e illustrates a stage wherein the spring system is formed, and the mass is released by etching through the second wafer and the device layer of the first wafer. The thickness of the spring system is thus substantially the same as the thickness of the mass, meaning the sum of thicknesses of the first wafer and the second wafer at that stage. Figure 5f illustrates a stage where the first and second wafer are bonded to a third wafer that hermetically encloses the gap.

In the examples of Figures 2a and 2b as well as of Figures 3a and 3b, the weight element 224 is formed of a hollow cavity, which is a vacuum or is filled with gas so that the weight per unit volume of the cavity with respect to the bulk material of the mass is less than one. However, the cavity does not necessarily need to be hollow, only the difference in the weight per unit volume is relevant. The cavity may alternatively be filled with some other type of substance whose weight per unit volume with respect to the bulk material of the mass is less than one. The substance within the cavity can include, for example, some solid or amorphous material that is lighter than the silicon material of the first and the second wafers. On the other hand, asymmetry can also be provided with one or more enclosed weight elements formed of a substance (e.g. metals and their alloys) whose weight per unit volume with respect to the silicon material of the first and the second wafers is greater than one. It is also possible to further enhance the mass imbalance by forming a mass wherein the first part of the mass on one side of the rotary axis includes one or more weight elements of substance whose weight per unit volume with respect to the bulk material of the mass is less than one and the second part of the mass on the other side of the rotary axis includes one or more weight elements of substance whose weight per unit volume with respect to the bulk material of the mass is greater than one. Examples of these alternatives will be discussed later in this description.

Returning back to Figures 3a and 3b, it is noted that the mass 304 has typically an essentially planar form and is symmetric with respect to the rotary axis 316. Figures 3a and 3b show an example configuration that includes a first electrode 330 and a second electrode 332 disposed on a planar first surface 334 of the body 302. As discussed earlier, the rotary axis 316 divides the mass into two parts, so that when the first part 336 of the mass moves closer to a first electrode 330 due to the rotary motion, the second part 338 of the mass moves farther away from the second electrode 332, and vice versa. In the example of Figures 3a and 3b, the first surface 334 that carries the static electrodes 330, 332 is in the cap part 310 of the body 302. The body 302 includes also a second surface 340 that is in the substrate part 308 of the body. This is an advantageous configuration because the cap part 310 can be pre-processed separately into a third wafer and then bonded to the pre-processed combination of the first wafer and the second wafer. The cap can be designed in an easy and compact way to provide the electrical coupling between the static electrodes 330, 332 and externally accessible electrical contacts 342 by means of through vias 344, which are separated from each other by electrically isolating glass regions that enable anodic boding of the third wafer to the second wafer. However, depending on the application, the first surface 334 that carries the static electrodes 330, 332 may be in the substrate part 308 of the body 302, and the second surface 340 may be in the cap part 310 of the body. In either case, the mass 304 is capacitively connected to the first electrode 330 and the second electrode 332 to provide at least one electrical signal that corresponds with the reciprocating rotary motion of the mass 304.

It is noted that Figures 3a and 3b are schematic drawings that indicate essentially the designed layer structure of the configuration. In an initial state when there is no sensed acceleration, the spring structures 318, 320 suspend the mass 304 to the body 302 and define the rotary axis that divides the mass into two mechanically equal parts 336, 338. The acceleration on these parts due to Earth's gravity is different, but this infinitesimal tilt is not shown in the schematic drawings.

The substrate part 308 and the cap part 310 enclose a gap 312 within which the mass 304 can move. In the example of Figures 3a and 3b, the gap 312 includes a first gap 346 formed between the first electrode 330 and the first part 336 of the mass and a second gap 348 formed between the second electrode 332 and the second part 338 of the mass. In the side of the first surface 334, the dimensions of the first gap 346 have an effect on gas damping on the first part 336 of the mass, and the dimensions of the second gap 348 have an effect on gas damping on the second part 338 of the mass 304. The first gap 346 and the second gap 348 are symmetric with respect to the rotary axis 316. The gap 312 includes also a third gap 350 that is formed between the second surface 340 and the first part 336 of the mass and a fourth gap 352 that is formed between the second surface 340 and the second part 338 of the mass. In the side of the second surface 340, the dimensions of the third gap 350 have an effect on gas damping on the first part 336 of the mass, and the dimensions of the fourth gap 352 have an effect on gas damping on the second part 338 of the mass 304. Due to the improved configuration, also the third gap 350 and the fourth gap 352 can now be processed to be symmetric with respect to the rotary axis 316. If dimensions of a gap in the out-of-plane direction OP are considered to represent height of the respective gap, the height of the first and the second gaps 346, 348 can be but does not need to be the same as the height of the third and fourth gaps 350, 352.

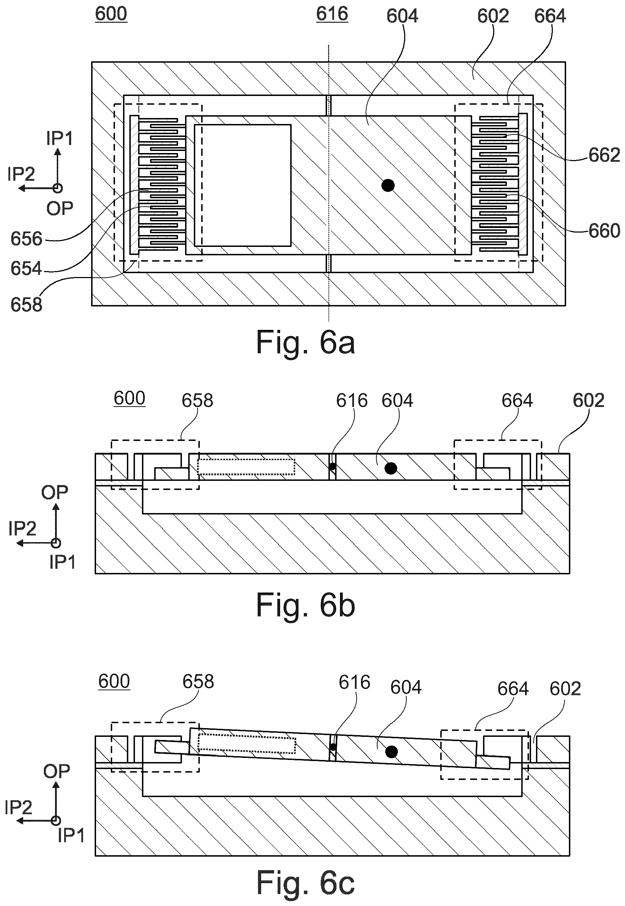

Figures 6a to 6c illustrate another option for detecting motion of the mass in the improved accelerometer element 600 according to the present invention. The structure of the accelerometer element 600 is shown in a simplified manner without the cap part of the body. Figure 6a shows a top view of the structure, Figure 6b shows a side view of the structure in the static initial stage and Figure 6c shows a side view of the structure in a tilted stage when the structure is exposed to acceleration in the out-of-plane direction OP. In order to more clearly outline the forms in the first and second wafer, Figures 6a to 6c illustrate the structure without the third wafer. The similarly referenced parts of the accelerometer element 600 correspond by far with the parts of the accelerometer element described with Figures 1, 2a and 2b, 3a and 3b, so additional description of them may be referred from disclosure of those examples. In the accelerometer element 600 of Figures 6a to 6c, however, the mass 604 and the body 602 are formed to include comb capacitors with teeth interdigitated with each other. Sides of the comb teeth in the out-of-plane direction are opposite each other and the overlap of the surfaces of the opposing sides of the comb teeth in the first in-plane direction IP1 increases and decreases when the mass 604 rotates about the rotary axis 616. In this example, a first set of comb teeth 654 is shown to project from the mass 604 in the positive second in-plane direction +IP2 and a second set of comb teeth 656 is shown to project from the body 602 in the negative second in-plane direction -IP2. The first set of comb teeth 654 and the second set of comb teeth 656 can be capacitively connected to form a first comb capacitor 658 in one end of the mass 604. Correspondingly, a third set of comb teeth 660 is shown to project from the mass 604 in the negative second in-plane direction -IP2 and a fourth set of comb teeth 662 is shown to project from the body 602 in the positive second in-plane direction +IP2. The third set of comb teeth 660 and the fourth set of comb teeth 662 can be capacitively connected to form a second comb capacitor 664 in the other end of the mass 604. In this example, the first set of comb teeth 654 and the third set of comb teeth 660 in the mass are etched down so that their dimension in the out-of-plane direction OP is smaller than the out-of-plane dimension of the second set of comb teeth 656 and the fourth set of comb teeth 662 in the body. As shown with Figure 6c, when the mass rotates about the rotary axis 616, overlap between the comb teeth in the first comb capacitor 658 remains the same but capacitance increases due to increased fringe fields and overlap between the comb teeth in the second comb capacitor 664 decreases which decreases capacitance. Changes in capacitances in the first comb capacitor 658 and the second comb capacitor 664 in opposite ends of a symmetric, rotating mass 604 can thus be used for differential detection of acceleration in the out-of-plane direction OP.

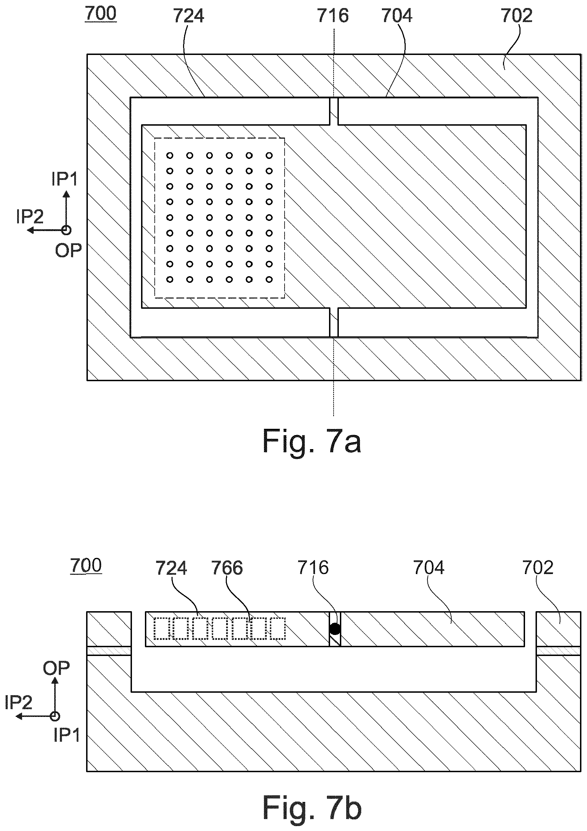

Figures 7a and 7b illustrate a further example structure for the accelerometer element. The accelerometer element 700 includes again the basic parts described with Figures 1a to 6b so additional description of them may be referred from disclosure of those examples. In this example the weight element 724 again includes a hollow cavity, but it could correspondingly include some material that is lighter or heavier than the bulk material of the mass. However, here the cavity includes one or more support structures 766 that extend through the cavity in the out-of-plane direction OP. Such support structures can be formed with appropriate masking during the etching stage of the first wafer, shown in Figure 4b, and they become attached to the second wafer in the direct bonding stage of Figure 4c. The support structures 766 provide mechanical support in the out-of-plane direction and prevent the walls of the cavity from bending. The volume of the cavity can thus be maximised without compromising mechanical stability of the mass 704. Figures 7a and 7b illustrate the support structures by means of a plurality of out-of-plane directed round pillars. These formations are advantageous because they provide a solid support in the out-of-plane direction but do not compartmentalise the volume of the hollow cavity.

However, other forms for the support structure can be applied without deviating from the scope of protection.

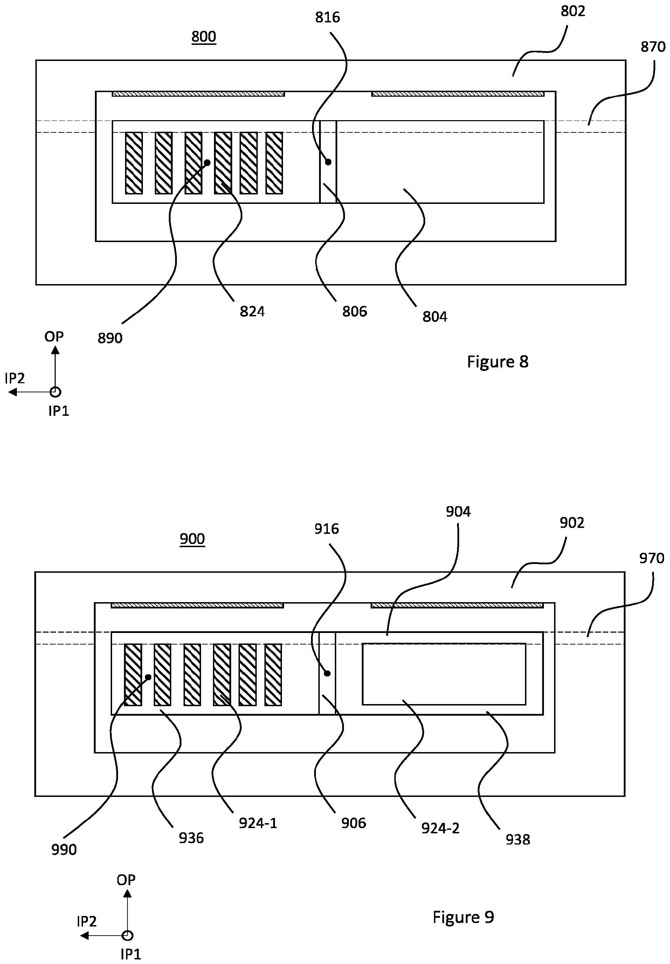

Figure 8 shows a side view of a further example structure for the accelerometer element. The accelerometer element 800 includes again the basic parts described with Figures 1 to 7b so additional description of them may be referred from disclosure of those examples. In Figure 8, the mass 804 includes a plurality of weight elements 824. Each weight element is a cavity in the bulk material of the mass 802, now filled with a substance that is heavier than the bulk material, i.e. whose weight per unit volume with respect to the bulk material of the mass is more than one. The position of the centre of the mass in the out-of-plane direction may be adjusted by the depth of the cavities and the thinning of the second wafer 870. For example, as shown in Figure 8, if the second wafer 870 is thinned to essentially equal to the thickness of the wall in the bottom of the cavities, the centre of gravity 890 of the mass 804 becomes adjusted so that it is offset from the rotary axis 816 in the second in-plane direction IP2 and the centre of gravity 890 of the mass 804 and the rotary axis 816 are at the same central level within the mass 804 in the out-of-plane direction OP. Cavities etched into the device layer of the first wafer for the one or more weight elements may be filled with any deposition method, for example by chemical vapor deposition. A further advantageous example for the manufacturing method and high-density materials applicable for forming the weight elements 824 is disclosed in, for example, patent application publication EP 3816100 A1.

Figure 9 shows a side view of a further example structure for the accelerometer element. The accelerometer element 900 includes again the basic parts described with Figures 1 to 8 so additional description of them may be referred from disclosure of those examples. In Figure 9, the asymmetric weight distribution of the mass 904 is further enhanced by including in the first part 936 of the mass weight elements 924-1 that are heavier than the bulk material of the mass and including in the second part 938 of the mass weight elements 924-2 that are lighter than the bulk material of the mass.

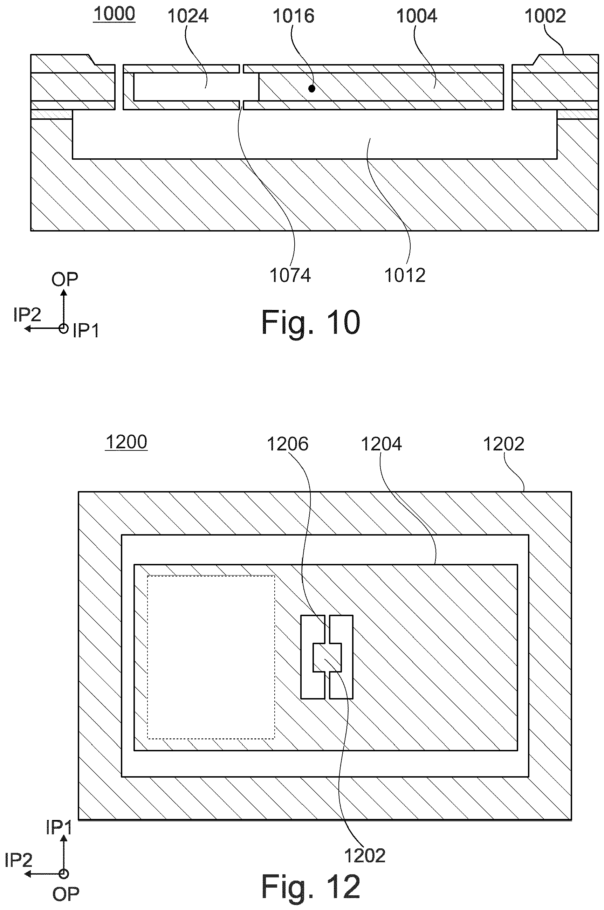

Figure 10 shows a side view of a further example structure for the accelerometer element. The accelerometer element 1000 illustrates the structure in a simplified manner without the cap part of the body. The accelerometer element 1000 includes the basic parts described with Figures 1 to 9 so additional description of them may be referred from disclosure of those examples. In the example of Figure 10, the mass 1004 includes a weight element 1024 formed of a hollow cavity. The cavity is within the mass 1004, between two essentially closed in-plane surfaces of the mass 1004, as described earlier but in this structure at least one of the first wafer or the second wafer includes a vent hole 1074 that extends in the out-of-plane direction OP and connects the space within the weight element 1024 and within the gap 1012. The one or more vent holes 1074 are included to balance the pressure within hollow spaces and therefore avoid creation of internal pressure differences that could cause deflection in the thinner parts of the hollow cavities. The minuscule vent holes 1074 are dimensioned to open less than 1% of the surface area of the mass 1004 but they can efficiently balance the pressures within the accelerometer element. This means that the advantage is achieved without essentially compromising the gas damping properties of the mass.

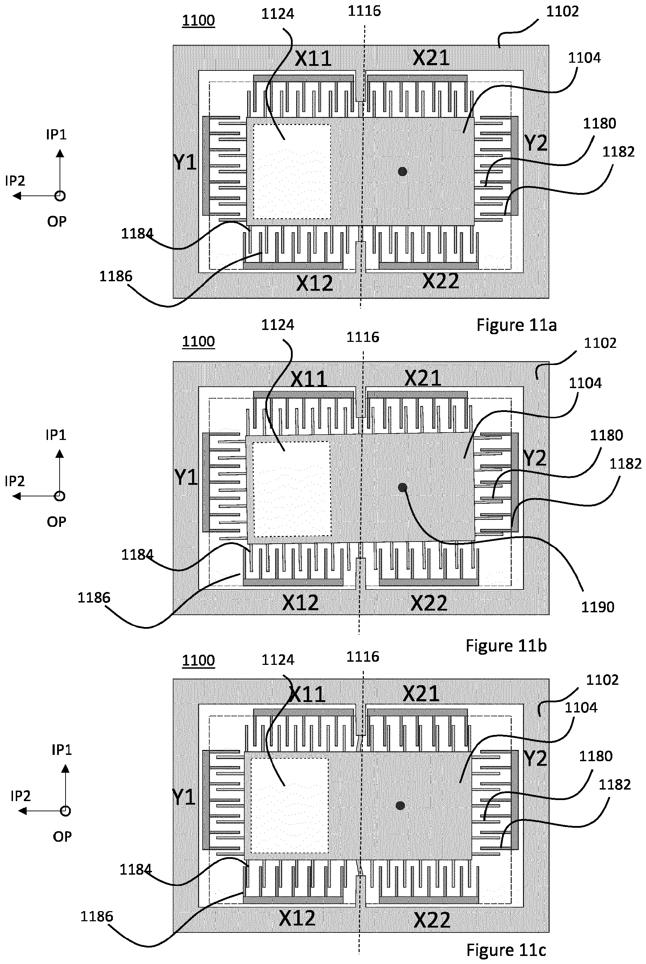

When the centre of gravity of the mass and the rotary axis are at the same level within the mass, the sensitivity axis for inertial sensing with the mass is not inclined and this means that motions of the mass in the in-plane direction do not induce any associated out-of-plane motion. This means that the mass that includes weight elements for our-of-plane detection OP can also be used to detect accelerations in one or even both of the in-plane directions IP1, IP2. Figures 11a to 11c illustrate a further example structure of this type of an accelerometer element wherein the mass includes teeth of a comb capacitor configured for sensing motions of the mass in at least one of the in-plane directions.

The accelerometer element 1100 includes again the basic parts described with Figures 1 to 10 so additional description of them may be referred from disclosure of those examples. In this example the weight element 1124 again includes a hollow cavity, but it could correspondingly include some material that is lighter or heavier than the bulk material of the mass. The mass may include electrode elements suitable for sensing motions of the mass in at least one of the in-plane directions. In this example, the mass 1104 includes moving comb fingers 1180, 1184 that move with in-plane motions of the mass and in respect of stationary comb fingers 1182, 1186 that are fixed to the body 1102. A first set of moving comb fingers 1180 and a first set of stationary comb fingers 1182 extend parallel to the second in-plane direction IP2 and form a first in-plane sensing element. A second set of moving comb fingers 1184 and a second set of stationary comb fingers 1186 extend parallel to the first in-plane direction IP1 and form a second in-plane sensing element.

In this example, the moving and stationary comb fingers 1180, 1182 of the first in-plane sensing element are arranged to form two capacitors Y1, Y2 capacitances of which are detected and used for differential detection in combination as:

$$Y=Y1-Y2 \hspace{5cm} \text{(Equation 1)}$$

The moving and stationary comb fingers 1184, 1186 of the second in-plane sensing element are arranged to form four comb capacitors X11, X12, X21, X22, capacitances of which are detected and used for differential detection. In this example, the differential detection in the first in-plane direction IP1 is implemented by detecting the capacitances in combination as:

$$X=(X11-X12)-(X21-X22) =(X11+X22)-(X12+X21) \hspace{2cm} \text{(Equation 2)}$$

It should be noted that the combination of capacitors in Figures 11a-c for differential detection is an example only. For example, the first in-plane sensing element can be implemented with four capacitors, or the second in-plane sensing element can be implemented with two capacitors, depending on the other structural aspects of the design. Figure 11a illustrates the structure in an initial state when it is not exposed to acceleration in the in-plane directions IP1, IP2.

Figure 11b shows the state of the structure when the mass 1104 responds to acceleration in the first in-plane direction IP1 by rotational movement about a rotation axis that is parallel to the out-of-plane direction OP and runs through the point in the middle of the springs. It is seen that in this case the distance between comb fingers in capacitor Y1 increases and the distance between comb fingers in capacitor Y2 decreases. This means that capacitance in capacitor Y1 decreases and capacitance in capacitor Y2 increases. Referring to the subtraction in Equation 1, the combination of the capacitances leads to a non-zero signal that represents said acceleration in the first in-plane direction IP1. It is further seen that in this case the distance between comb fingers in capacitors X11, X12 increases and the distance between comb fingers in capacitors X21 and X22 decreases correspondingly. This means that capacitance in capacitors X11, X12 decreases and capacitance in capacitors X21 and X22 increases correspondingly. Referring to Equation 2, one sees that increase and decrease of capacitances compensate each other. Accordingly, the measured signal resulting from capacitors X11, X12, X21, X22 in response to the motion of the mass in the first in-plane direction IP1 is zero.

In structures designed for multi-axis detection, one channel relates to structures related to detection in one direction. For example, in the example structure of Figures 11a-c, Equation 1 relates to capacitors Y1, Y2 and thus to a channel for detection in the first in-plane direction IP1 and Equation 2 to structures related to a channel for detection in the second in-plane direction IP2. A basic intent is that acceleration in one direction causes a measured signal only in a channel dedicated for detection in that direction. For example, acceleration in IP1 direction should ideally not cause cross-axis signal in channels for the IP2 and OP directions. To an extent, cross-axis signal can be compensated by signal processing, but this comes with increased cost of the overall MEMS system and compromised performance of the structure (robustness to vibrations, stability and offset over temperature variations).

In some conventional structures, multi-axis detection has been implemented by relating channels to separately moving, decoupled masses. However, this means that the available component size needs to be divided for the separate masses. A better signal-to-noise can be achieved by means of a common mass. The structure illustrated with Figures 11a-c enables detection with a common mass but so that motion of the mass in one in-plane direction generates a signal only in a channel dedicated for detection in that particular direction. As described above, acceleration in the first in-plane direction IP1 generates a signal through capacitors Y1, Y2 only, capacitances of capacitors X11, X12, X21, X22 compensate each other.

Figure 11c shows the state of the structure when the mass 1104 responds to acceleration in the second in-plane direction IP2. Since there is no asymmetry in this direction, the motion is linear motion in the IP2 direction. It is seen that in this case the distance between comb fingers in capacitors X11, X22 increases and the distance between comb fingers in capacitors X21 and X12 decreases correspondingly. This means that capacitance in capacitors X11, X22 decreases and capacitance in capacitors X21 and X12 increases correspondingly. Referring to the Equation 2, the combination of the capacitances leads to a non-zero signal that represents said acceleration in the second in-plane direction IP2. The overlap between moving and stationary comb fingers in capacitor Y1 increases slightly and the overlap between moving and stationary comb fingers in capacitor Y2 decreases correspondingly. This means that capacitance in capacitor Y1 increases and capacitance in capacitor Y2 decreases correspondingly. Referring to Equation 1, the measured signal resulting from capacitors Y1, Y2 in response to the motion of the mass in the second in-plane direction IP2 is essentially zero.

Accordingly, the disclosed structure enables multi-axis detection in three directions with a very compact element size and minimal cross-axis sensitivity.

Figure 12 illustrates schematically an alternative for the connection between the mass 1204 and the body 1202 for the accelerometer element in the previous examples of Figures 1 to 11. The body of the accelerometer element may include one or more anchors that provide a locally stationary support for the spring system that elastically couples the mass to the body. In the schematic example of Figure 12, the body 1202 of the accelerometer element 1200 includes an anchor 1202-1. The spring system 1206 includes two torsional spring structures, wherein one end of each torsional spring structure is fixed to the mass 1204 and the other end of the torsional spring structure is fixed to the anchor 1202-1. Due to the central anchoring, the structure is less affected by deformations caused by variations in operating conditions, like temperature changes.

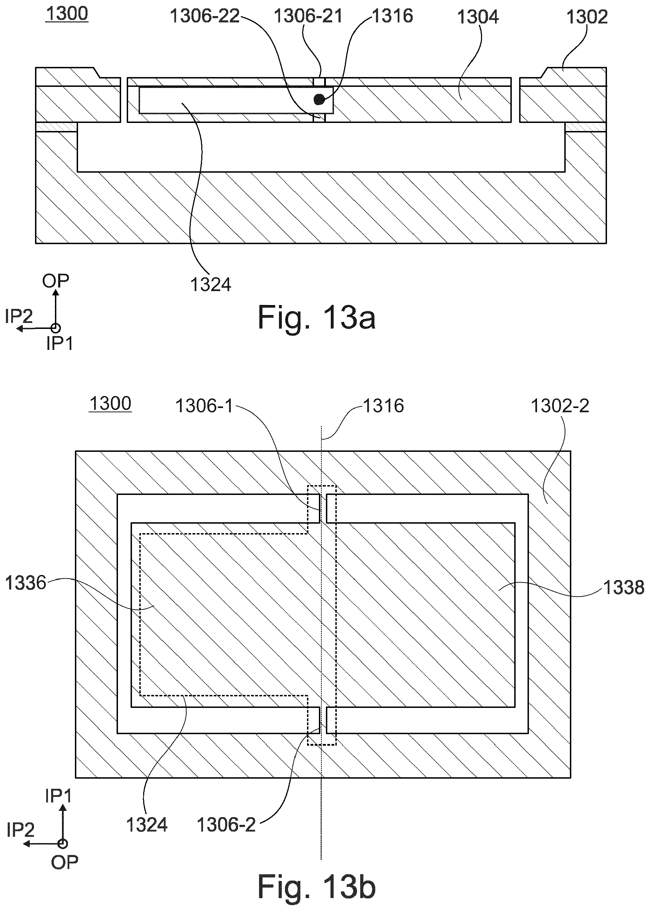

Figures 13a and 13b show a side view and a top view of a further example structure for the accelerometer element. The accelerometer element 1300 includes again the basic parts described with Figures 1 to 12 so additional description of them may be referred from disclosure of those examples. In the structure of Figures 13a and 13b, the mass 1304 is coupled to the body 1302 through a spring system formed of torsional spring structures 1306-1, 1306-2. The body 1302 includes a frame 1302-2 that surrounds the mass 1304 and provides an out-of-plane directed surface to which torsional spring structures 1306-1, 1306-2 of the spring system are connected. The torsional spring structures 1306-1, 1306-2 extend outwards from two opposite sides of the mass 1304. One end of each torsional spring in a torsional spring structure is connected to the body 1302 and the other end of each torsional spring structure is connected to the mass 1304. Again, the spring system extends in the out-of-plane direction at least to the same thickness as the mass 1304. In this example, , each torsional spring structure 1306-1 and 1306-2 includes two separate torsional springs that create the torsional spring structure so that the axis of rotation 1316 is formed between the torsional springs. Figure 13a shows two torsional springs 1306-21 and 1306-22 that create the torsional spring structure 1306-2 of Figure 13b. The advantage of such divided form of the torsional spring structure is that the out-of-plane form that extends at least to the full thickness of the mass 1304 provides the added robustness, but the possibility to adjust the distance between the torsional springs provides further an additional new parameter through which characteristics of the spring system can be controlled. In this example, the torsional springs 1306-21 and 1306-22 protrude from the mass 1304 in the IP1 direction and are aligned in the OP direction. This is achieved by forming the cavity of the weight element 1324 (etched in the stage of Figure 4b) so that it extends in the IP2 direction from the first part 1336 of the mass 1304 beyond the axis of rotation 1316. The dashed region in Figure 13b illustrates in top view a possible form for the cavity etched for the weight element 1324. For a person skilled in the art it is clear that in both of the torsional spring structures, the torsional springs can be oriented alternatively by forming them to protrude from the mass 1304 in the IP1 direction and be aligned in the IP2 direction. Furthermore, as shown in Figure 12, instead of connecting to the frame 1302-2, the torsional spring structures can be oriented alternatively by forming the torsional springs to protrude inwards from the mass 1304 in the IP1 direction and connect to a common anchor. The torsional springs of one torsional spring structure can be aligned in the OP direction or in the IP2 direction.

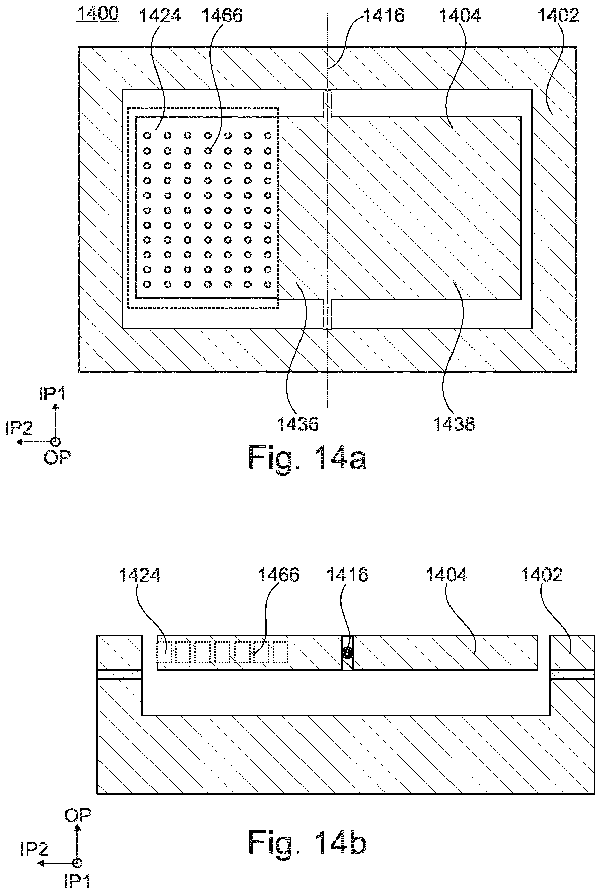

Figures 14a and 14b show a top view of a further example structure for the accelerometer element. The accelerometer element 1400 includes again the basic parts described with Figures 1 to 13 so additional description of them may be referred from disclosure of those examples. The dashed region in Figure 14a illustrates in top view a possible form for the cavity etched for the weight element 1424. As described earlier, the cavity includes one or more support structures 1466 that extend through the cavity in the out-of-plane direction OP. Such support structures can be formed with appropriate masking during the etching stage of the first wafer, shown in Figure 4b, and they become attached to the second wafer in the direct bonding stage of Figure 4c. As can be seen, in this example, outer edge of the cavity of the weight element 1424 (etched in the stage of Figure 4b) extends beyond the outer edge of the mass 1404 (released by etching in the stage of Figure 4f). Due to this the cavity is open in the out-of-plane extending sides and in the out-of-plane extending end of the first part 1436 of the mass 1404. The hollow cavity may be open in at least one side of the mass, which side extends in the out-of-plane direction OP. In the example of Figures 14a and 14b, the cavity is open in three different out-of-plane extending sides. The support structures 1466 ensure that the open cavity is mechanically stable even if the volume of the cavity and thus the imbalance between the first part of the mass and the second part of the mass is increased.

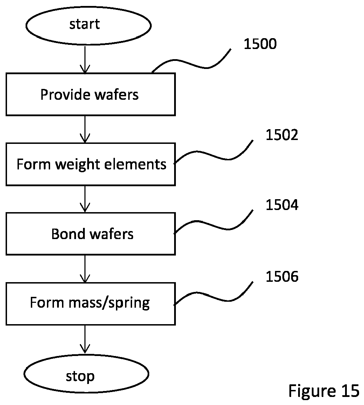

Figure 15 illustrates example stages of a method for manufacturing the accelerometer element described herein. The accelerometer element includes a body, a planar mass that extends in two in-plane directions, and a spring system that is formed to couple the mass to the body and allow the mass a reciprocating rotary motion about a rotary axis that is parallel to a first in-plane direction. Additional description of these parts may be referred from disclosure of examples described with Figures 1 to 14. The method includes providing (stage 1500) a first wafer that includes a layer of a silicon material and a second wafer of that is formed of the same silicon material. One or more weight elements of a substance whose weight per unit volume with respect to the silicon material is either less than one or greater than one is then formed (stage 1502) into the layer of the silicon material. The first wafer and the second wafer are bonded (stage 1504) to each other and the mass and the spring system are both formed (stage 1506) from the bonded combination of the first wafer and the second wafer so that the centre of gravity of the mass is offset from the rotary axis in the second in-plane direction and the centre of gravity of the mass and the rotary axis are at the same level within the mass in an out-of-plane direction that is orthogonal to the first in-plane direction and the second in-plane direction. The first wafer may be provided in form of a bonded silicon-on-insulator wafer that includes a handle wafer part and a device wafer part separated by an insulator layer part, wherein the device wafer part is used as the layer of the silicon material. The handle wafer part may include built-in cavity sections and an anchoring region, and in the method the first wafer and the second wafer may be aligned so that in a projection in the out-of-plane direction, the anchoring region coincides with the rotary axis and the cavity sections extend away from the rotary axis in the second in-plane direction in both sides of the rotary axis. As described earlier with Figures 4a to 4g, direct bonding is advantageously used in bonding of the first wafer and the second wafer.

The following is a list of embodiments of the invention which may or may not be claimed later:

1. An accelerometer element including

a body;

a mass;

a spring system that couples the mass to the body;

a virtual reference plane that extends in a first in-plane direction and in a second in-plane direction, wherein the first in-plane direction and the second in-plane direction are orthogonal; wherein

the spring system is formed to allow the mass a reciprocating rotary motion about a rotary axis that is parallel to the first in-plane direction;

the mass includes a volume of a bulk material that forms two essentially closed surfaces that extend in the first in-plane direction and the second in-plane direction;

the mass incorporates between the two essentially closed surfaces one or more weight elements, each of which is formed of a substance whose weight per unit volume is different from weight per unit volume of the bulk material;

the one or more weight elements are incorporated in the mass so that the centre of gravity of the mass is offset from the rotary axis in the second in-plane direction and the centre of gravity of the mass and the rotary axis are at the same level within the mass in an out-of-plane direction that is orthogonal to the first in-plane direction and the second in-plane direction.

2. An accelerometer element according to embodiment 1, wherein the one or more weight elements include a hollow cavity.

3. An accelerometer element according to embodiment 2, wherein the hollow cavity includes at least one support structure extending through the cavity in the out-of-plane direction.

4. An accelerometer element according to embodiment 3, wherein the hollow cavity is open in at least one side of the mass, which side extends in the out-of-plane direction between the two essentially closed surfaces.

5. An accelerometer element according to embodiment 1, wherein

the weight elements include a cavity filled with a substance whose weight per unit volume with respect to the bulk material of the mass is greater than one; or

the weight elements include a cavity filled with a substance whose weight per unit volume with respect to the bulk material of the mass is less than one.

6. An accelerometer element according to any of the preceding embodiments, wherein a form of the boundary of the mass is symmetric with respect to the rotary axis.

7. An accelerometer element according to any of the preceding embodiments, further including a first electrode and a second electrode disposed on a planar first surface of the body; wherein
the first electrode and the second electrode are disposed symmetrically with respect to the rotary axis.

8. An accelerometer element according to embodiment 7, **characterized** in that the rotary axis divides the mass into two parts so that in the reciprocating rotary motion, one part of the mass moves closer to one of the first and second electrodes, and the other part of the mass moves correspondingly away from the other one of the first and second electrodes.

9. An accelerometer element according to embodiment 7 or 8, **characterized** in that

the body includes a substrate part and a cap part;

the first surface is in the cap part of the body;

the body includes a second surface that is in the substrate part.

10. An accelerometer element according to embodiment 7 or 8, **characterized** in that

the body includes a substrate part and a cap part;

the first surface is a surface in the substrate part of the body;

the body includes a second surface that is in the cap part.

11. An accelerometer element according to embodiment 9 or 10, **characterized** in that in an initial static state, a first gap between the first electrode and the mass and a second gap between the second electrode and the mass are symmetric with respect to the rotary axis.

12. An accelerometer element according to any of the preceding embodiments 7-11, **characterized** in that the bulk material of the mass is silicon material that is capacitively connected to the first electrode and the second electrode to provide at least one electrical signal that corresponds with the reciprocating rotary motion of the mass.

13. An accelerometer element according to any of the preceding embodiments 1 to 7, **characterized** in that at least one end in opposite ends of the mass in the second in-plane direction includes teeth of a comb capacitor interdigitated with teeth of a comb capacitor in the body so that overlap between the interdigitated combs varies according to the reciprocating rotary motion of the mass.

14. An accelerometer element according to embodiment 13, **characterized** in that the bulk material of the mass is silicon material and teeth of the comb capacitor in the mass are capacitively connected to the teeth of the comb capacitor in the body to provide at least one electrical signal that corresponds with the reciprocating rotary motion of the mass.

15. An accelerometer element according to any of the preceding embodiments 1 to 12, **characterized** in that the mass includes teeth of a comb capacitor configured for sensing motions of the mass in at least one of the in-plane directions.

16. An accelerometer element according to embodiment 15, **characterized** in that opposite sides of the mass in an in-plane direction includes teeth of a comb capacitor interdigitated with teeth of the comb capacitor in the body.

17. An accelerometer element according to embodiment 16, **characterized** in that capacitances of comb capacitors in opposite sides of the mass are used for differential detection.

18. An accelerometer element according to any of embodiments 15 to 17, **characterized** in that the mass has a cuboid form and includes comb capacitors for detecting motions of a common mass in both in-plane directions.

19. An accelerometer element according to any of the preceding embodiments, **characterized** in that

in an initial static state, the mass has a thickness dimension in the out-of-plane direction;

the spring system extends in the out-of-plane direction at least to the same thickness as the mass;

the level of the rotary axis and the centre of gravity of the mass is in the middle of the thickness of the mass.

20. An accelerometer element according to any of the preceding embodiments, **characterized** in that the spring system extends in the out-of-plane direction substantially to the same thickness as the mass.

21. An accelerometer element according to any of the preceding embodiments, **characterized** in that that

the mass includes a first layer of the bulk material and a second layer of the bulk material;

the first layer of the bulk material and the second layer of the bulk material extend parallel to the virtual reference plane;

a first surface of the mass is formed on the first layer of the bulk material;

a second surface of the mass is formed on the second layer of the bulk material; the first layer of the bulk material and the second layer of the bulk material enclose the one or more weight elements between them.

22. An accelerometer element according to embodiment 21, **characterized** in that at least one of the first layer and the second layer includes a vent hole that extends through the respective layer to a weight element.

23. An accelerometer element according to embodiment 21 or 22, **characterized** in that that the mass is formed of a first wafer and a second wafer, bonded to each other so that the first surface of the mass is formed on the first wafer and the second surface of the mass is formed on the second wafer.

24. An accelerometer element according to embodiment 23, **characterized** in that the one or more weight elements are formed into the second wafer.

25. An accelerometer according to any of the preceding embodiments, **characterised** in that

the body of the accelerometer includes an anchor that provides a locally stationary support for the spring system; the spring system includes two torsional spring structures; one end of each torsional spring structure is connected to the mass and the other end is connected to the anchor.

26. An accelerometer according to any of the preceding embodiments 1 to 25, **characterised** in that

the body of the accelerometer includes a frame that provides a locally stationary support for the spring system; the spring system includes two torsional spring structures; one end of each torsional spring structure is connected to the mass and the other end is connected to the frame.

27. An accelerometer according to embodiment 25 or 26, **characterised** in that each of the two torsional spring structures includes two torsional springs.

28. An accelerometer according to embodiment 27, **characterised** in that the two torsional springs protrude in from the mass in the first in-plane direction and are aligned in the out-of-plane direction or in the second in-plane direction.

29. A method of manufacturing an accelerometer element that includes a body, a planar mass that extends in two in-plane directions, and a spring system that is formed to couple the mass to the body and allow the mass a reciprocating rotary motion about a rotary axis that is parallel to a first in-plane direction, the method including:

providing a first wafer that includes a layer of a silicon material and a second wafer of the silicon material;
forming into the layer of the silicon material one or more weight elements of a substance whose weight per unit volume with respect to the silicon material is either less than one or greater than one;
bonding the first wafer to the second wafer;
forming the mass and the spring system from the bonded combination of the first wafer and the second wafer so that the centre of gravity of the mass is offset from the rotary axis in the second in-plane direction and the centre of gravity of the mass and the rotary axis are at the same level within the mass in an out-of-plane direction that is orthogonal to the first in-plane direction and the second in-plane direction.

30. A method according to embodiment 29, **characterized** by providing the first wafer in form of a bonded silicon-on-insulator wafer that includes a handle wafer part and a device wafer part separated by an insulator layer part, wherein the device wafer part is used as the layer of the silicon material.

31. A method according to embodiment 30, **characterized** in that the handle wafer part further includes cavity sections and an anchoring region, and the method further includes aligning the first wafer and the second wafer so that in a projection in the out-of-plane direction, the anchoring region coincides with the rotary axis and the cavity sections extend away from the rotary axis in the second in-plane direction in both sides of the rotary axis.

32. A method according to any of embodiments 29 to 31, **characterized** by after bonding the first wafer to the second wafer, thinning the second wafer; leaving a layer of the first silicon material to cover the one or more weight elements.

33. A method according to any of embodiments 29 to 32, **characterized** by bonding the first wafer to the second wafer by direct bonding.

34. A method according to any of embodiments 29 to 33, **characterized** by forming the mass and the spring system from the same bonded combination of the first wafer and the second wafer.

## Claims

1. An accelerometer element including

   a body;
   a mass;
   a spring system that couples the mass to the body;
   a virtual reference plane that extends in a first in-plane direction and in a second in-plane direction, wherein the first in-plane direction and the second in-plane direction are orthogonal; wherein
   the spring system is formed to allow the mass a reciprocating rotary motion about a rotary axis that is parallel to the first in-plane direction;
   the mass includes a volume of a bulk material that forms two essentially closed surfaces that extend in the first in-plane direction and the second in-plane direction;
   the mass incorporates between the two essentially closed surfaces one or more weight elements, each of which is formed of a substance whose weight per unit volume is different from weight per unit volume of the bulk material;
   the one or more weight elements are incorporated in the mass so that the centre of gravity of the mass is offset from the rotary axis in the second in-plane direction and the centre of gravity of the mass and the rotary axis are at the same level within the mass in an out-of-plane direction that is orthogonal to the first in-plane direction and the second in-plane direction.

2. An accelerometer element according to claim 1, wherein the one or more weight elements include a hollow cavity.

3. An accelerometer element according to claim 1 or 2, wherein

   the weight elements include a cavity filled with a substance whose weight per unit volume with respect to the bulk material of the mass is greater than one; or
   the weight elements include a cavity filled with a substance whose weight per unit volume with respect to the bulk material of the mass is less than one.

4. An accelerometer element according to any of the preceding claims, wherein a form of the boundary of the mass is symmetric with respect to the rotary axis.

5. An accelerometer element according to any of the preceding claims, further including a first electrode and a second electrode disposed on a planar first surface of the body; wherein

   the first electrode and the second electrode are disposed symmetrically with respect to the rotary axis;
   the rotary axis divides the mass into two parts so that in the reciprocating rotary motion, one part of the mass moves closer to one of the first and second electrodes, and the other part of the mass moves correspondingly away from the other one of the first and second electrodes.

6. An accelerometer element according to claim 5, **characterized in that** a bulk material of the mass is silicon material that is capacitively connected to the first electrode and the second electrode to provide at least one electrical signal that corresponds with the reciprocating rotary motion of the mass.

7. An accelerometer element according to any of the preceding claims 1 to 6, **characterized in that** at least one end in opposite ends of the mass in the second in-plane direction includes teeth of a comb capacitor interdigitated with teeth of a comb capacitor in the body so that overlap between the interdigitated combs varies according to the reciprocating rotary motion of the mass.

8. An accelerometer element according to any of the preceding claims, **characterized in that**

   in an initial static state, the mass has a thickness in the out-of-plane direction; the spring system extends in the out-of-plane direction at least to the same thickness as the mass;
   the level of the rotary axis and the centre of gravity of the mass is in the middle of the thickness of the mass.

9. An accelerometer element according to any of the preceding claims, **characterized in that** the spring system extends in the out-of-plane direction substantially to the same thickness as the mass.

10. An accelerometer element according to any of the preceding claims, **characterized in that** that

    the mass includes a first layer of the bulk material and a second layer of the bulk material;
    the first layer of the bulk material and the second layer of the bulk material extend parallel to the virtual reference plane;
    a first surface of the mass is formed on the first layer of the bulk material;
    a second surface of the mass is formed on the second layer of the bulk material; the first layer of the bulk material and the second layer of the bulk material enclose the one or more weight elements between them.

11. A method of manufacturing an accelerometer element that includes a body, a planar mass that extends in two in-plane directions, and a spring system that is formed to couple the mass to the body and allow the mass a reciprocating rotary motion about a rotary axis that is parallel to a first in-plane direction, the method including:

    providing a first wafer that includes a layer of a silicon material and a second wafer of the silicon material;
    forming into the layer of the silicon material one or more weight elements of a substance whose weight per unit volume with respect to the silicon material is either less than one or greater than one;
    bonding the first wafer to the second wafer;
    forming the mass and the spring system from the bonded combination of the first wafer and the second wafer so that the centre of gravity of the mass is offset from the rotary axis in the second in-plane direction and the centre of gravity of the mass and the rotary axis are at the same level within the mass in an out-of-plane direction that is orthogonal to the first in-plane direction and the second in-plane direction.

12. A method according to claim 11, **characterized by** providing the first wafer in form of a bonded silicon-on-insulator wafer that includes a handle wafer part and a device wafer part separated by an insulator layer part, wherein the device wafer part is used as the layer of the silicon material.

13. A method according to claim 11 or 12, **characterized by** after bonding the first wafer to the second wafer, thinning the second wafer; leaving a layer of the first silicon material to cover the one or more weight elements.

14. A method according to any of claims 11 to 13, **characterized by** bonding the first wafer to the second wafer by direct bonding.

**15.** A method according to any of claims 11 to 14, **characterized by** forming the mass and the spring system from the same bonded combination of the first wafer and the second wafer.

116

102

100

114

OP

IP2

IP1

136

130 106 132

138

104

Figure 1a

130

132

104

102

100

IP1

IP2

OP

106

116

Figure 1b

200
216 290
224 204 202
OP
IP2
IP1
214
236
230 206 232 238

Figure 2a

200
230 220 232
204
IP1
IP2
OP
202
290
224 218

Figure 2b

216

Fig. 3a

Fig. 3b

Fig. 4a

Fig. 4b

Fig. 4c

Fig. 4d

Fig. 4e

Fig. 4f

Fig. 4g

EP 4 249 923 A1

Fig. 5a

Fig. 5b

Fig. 5c

Fig. 5d

Fig. 5e

Fig. 5f

600       616 604  602 664

IP1

IP2

OP

656

654

658

662

660

## Fig. 6a

600 658   616 604   664  602

OP

IP2

IP1

## Fig. 6b

600 658   616 604  664 602

OP

IP2

IP1

## Fig. 6c

23

700    724        716   704        702

IP1
IP2
OP

Fig. 7a

700    724  766    716        704        702

OP
IP2
IP1

Fig. 7b

Figure 8

Figure 9

1000    1024    1016    1004    1002

1074    1012

OP

IP2 ↑ IP1

# Fig. 10

1200    1206    1204    1202

IP1

IP2

OP

1202

# Fig. 12

Figure 11a

Figure 11b

Figure 11c

Fig. 13a

Fig. 13b

1400    1424    1466                    1416    1404    1402

IP1
IP2
OP

1436                    1438

Fig. 14a

1424                    1466    1416            1404            1402

OP
IP2
IP1

Fig. 14b

```
           ┌───────────┐
           │   start   │
           └─────┬─────┘
                 │                        ╮╭  1500
         ┌───────▼───────┐                ╯╰
         │ Provide wafers │
         └───────┬───────┘
                 │                        ╮╭  1502
         ┌───────▼───────────┐            ╯╰
         │ Form weight elements │
         └───────┬───────────┘
                 │                        ╮╭  1504
         ┌───────▼───────┐                ╯╰
         │  Bond wafers   │
         └───────┬───────┘
                 │                        ╮╭  1506
         ┌───────▼───────────┐            ╯╰
         │ Form mass/spring  │
         └───────┬───────────┘
                 │
           ┌─────▼─────┐
           │   stop    │
           └───────────┘
```

Figure 15

Europäisches
Patentamt

European
Patent Office

Office européen
des brevets

**EUROPEAN SEARCH REPORT**

Application Number

EP 23 16 0882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/208849 A1 (ZHANG) 31 July 2014 (2014-07-31) * abstract; figures * * paragraphs [0010], [0022] – [0030] * ----- | 1-15 | INV. G01P15/125 G01P15/08 |
| X | US 2010/024552 A1 (FOSTER) 4 February 2010 (2010-02-04) | 1-9 | |
| A | * abstract; figures * * paragraphs [0012] – [0024] * ----- | 10-15 | |
| X | US 2016/313462 A1 (ULLRICH ET AL) 27 October 2016 (2016-10-27) * abstract; figures * * paragraphs [0003], [0033] – [0053] * ----- | 1-7, 10-15 | |
| X | US 2020/156930 A1 (CLASSEN ET AL) 21 May 2020 (2020-05-21) * abstract; figures 7-8 * * paragraphs [0056] – [0062] * ----- | 1-6, 10-15 | |

TECHNICAL FIELDS
SEARCHED      (IPC)

G01P
B81B

The present search report has been drawn up for all claims

| Place of search | Date of completion of the search | Examiner |
|---|---|---|
| Munich | 19 July 2023 | Barthélemy, Matthieu |

EPO FORM 1503 03.82 (P04C01)

## ANNEX TO THE EUROPEAN SEARCH REPORT
## ON EUROPEAN PATENT APPLICATION NO.

EP 23 16 0882

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2023

| Patent document cited in search report | | Publication date | Patent family member(s) | | Publication date |
|---|---|---|---|---|---|
| US 2014208849 | A1 | 31-07-2014 | NONE | | |
| US 2010024552 | A1 | 04-02-2010 | EP | 2151691 A2 | 10-02-2010 |
| | | | JP | 5770968 B2 | 26-08-2015 |
| | | | JP | 6088587 B2 | 01-03-2017 |
| | | | JP | 2010038903 A | 18-02-2010 |
| | | | JP | 2015212701 A | 26-11-2015 |
| | | | US | 2010024552 A1 | 04-02-2010 |
| US 2016313462 | A1 | 27-10-2016 | CN | 106093470 A | 09-11-2016 |
| | | | DE | 102015207639 A1 | 27-10-2016 |
| | | | US | 2016313462 A1 | 27-10-2016 |
| US 2020156930 | A1 | 21-05-2020 | CN | 111186810 A | 22-05-2020 |
| | | | DE | 102018219546 B3 | 12-09-2019 |
| | | | TW | 202043135 A | 01-12-2020 |
| | | | US | 2020156930 A1 | 21-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10126322 B2
- EP 3816100 A1